# EUROPÄISCHE PATENTSCHRIFT

(11) **EP 2 955 274 B1**
(45) Veröffentlichungstag und Bekanntmachung des Hinweises auf die Patenterteilung: **24.07.2019**
(21) Anmeldenummer: 15168320.8
(22) Anmeldetag: 20.05.2015
(51) Int. Cl.: E01D 15/12, E01D 15/127

(54) **TRANSPORTIERBARE FALTBARE BRÜCKE**
TRANSPORTABLE FOLDABLE BRIDGE
PASSERELLE PLIABLE ET MOBILE

(30) Priorität: 10.06.2014 DE 102014008178
(43) Veröffentlichungstag der Anmeldung: 16.12.2015
(73) Patentinhaber: General Dynamics European Land Systems-Bridge Systems GmbH, 67655 Kaiserslautern (DE)
(72) Erfinder: Fraundorfer, Werner, 67685 Weilerbach (DE)
(74) Vertreter: Patentanwälte Dr. Keller, Schwertfeger Partnerschaft mbB

(56) Entgegenhaltungen:
- DE-A1- 1 658 621
- DE-A1-102010 038 127
- DE-B3-102004 049 969
- FR-A- 1 550 111

## Beschreibung

Die vorliegende Erfindung betrifft eine transportierbare faltbare Brücke, die einen gefalteten Transportzustand und einen entfalteten Verlegezustand aufweist.

Faltbare transportierbare Brücken, die auch als Scherenbrücken bezeichnet werden, sind bereits bekannt.

So beschreiben beispielsweise die DE 10 2004 049 969 B3 und die DE 10 2010 038 127 A1 Scherenbrücken, die auf einem Transportfahrzeug, insbesondere einem Kettenfahrzeug, transportiert werden.

Den faltbaren transportierbaren Brücken, insbesondere Scherenbrücken, ist gemeinsam, dass sie aus zwei Brückenelementen bestehen, die gelenkig miteinander verbunden sind, wobei im Transportzustand, wenn die Brücke mittels des Transportfahrzeugs transportiert wird, die beiden Brückenelemente zusammengeklappt sind und im Verlegezustand die beiden Brückenelemente entfaltet sind und eine Fahrbahn bilden.

Teilweise können die Brücken bereits auf den Transportfahrzeugen in einen entfalteten Zustand überführt werden, um dann mittels entsprechender Vorrichtungen am Transportfahrzeug in eine gewünschte Verlegeposition über ein Hindernis, wie beispielsweise ein Fluss oder Graben, gebracht zu werden. Auf diese Weise lassen sich Hindernisse beispielsweise Flüsse oder Gräben schnell überqueren.

Da die Brückenelemente ein hohes Eigengewicht haben, spielt die Gewichtsverteilung der Brückenelemente auf dem Transportfahrzeug eine wichtige Rolle.

Insbesondere beim Entfalten der Brückenelemente auf dem Trägerfahrzeug kommt es zu einer Verschiebung des Schwerpunkts der Brücken, so dass beim Entfalten der schweren Brückenhälften der Schwerpunkt des Fahrzeugs derart ungünstig verschoben werden kann, dass zusätzliche, an der Brücke bzw. dem Verlegemechanismus angeordnete Abstützvorrichtungen notwendig sein können.

Zur Lösung dieses Problems schlägt die DE 1 658 621 A eine Klappbrücke mit zwei Auffahrrampen vor, die an den Enden eines Mittelstücks klappbar ausgelenkt sind.

Die in der DE 1 658 621 A beschriebene Brücke ist in Bezug auf die Entfaltung der Brücke auf dem Transportfahrzeug optimiert.

Transportierbare faltbare Brücken werden jedoch von einer Vielzahl unterschiedlicher Fahrzeuge transportiert. Da die Fahrzeuge unterschiedliche Bauarten und Größen aufweisen, weisen die Fahrzeuge unterschiedliche Schwerpunkte auf. Somit ist nicht jedes Fahrzeug für den Transport einer vorgegebenen transportierbaren faltbaren Brücke geeignet, da die Länge und der Schwerpunkt der Brücke nicht auf die Länge und den Schwerpunkt des Transportfahrzeugs abgestimmt sind.

Es ist daher Aufgabe der vorliegenden Erfindung, eine transportierbare faltbare Brücke bereitzustellen, deren Länge und Schwerpunkt veränderbar sind, so dass die faltbare Brücke von einer Vielzahl von Transportfahrzeugen transportierbar und verlegbar ist. Weiterhin ist es Aufgabe der vorliegenden Erfindung ein Verlegefahrzeug bereitzustellen, das ausgelegt ist, die transportierbare, faltbare Brücke zu transportieren und zu verlegen.

Die Aufgabe wird durch eine transportierbare faltbare Brücke gemäß Anspruch 1 gelöst.

Mit Hilfe des Zwischenelements ist es möglich, die Länge der Brücke zu variieren. Darüber hinaus bietet die Faltung eines Rampenelements die Möglichkeit, die Lage des Schwerpunkts der Brücke in dem Transportzustand zu beeinflussen. Durch geeignete Wahl der Länge und Lage des Schwerpunkts der Brücke ist es möglich eine faltbare, transportierbare Brücke auf die vorgegebene Größe und den vorgegebenen Schwerpunkt eines Transportfahrzeugs optimal abzustimmen, so dass insbesondere für den Transport der Brücke keine weiteren Stützvorrichtungen an dem Transportfahrzeug notwendig sind. So ist es bei einem ersten gegebenen Transportfahrzeug mit vorgegebenem Schwerpunkt des Transportfahrzeugs von Vorteil, dass in einem Transportzustand der Brücke das erste Rampenelement oberhalb des Zwischenelements angeordnet ist und das erste Rampenelement in etwa die gleiche Länge aufweist wie das Zwischenelement.

Bei einem weiteren gegebenen Transportfahrzeug mit vorgegebenem Schwerpunkt ist es von Vorteil, dass gemäß einer alternativen Ausführungsform einer Brücke in einem Transportzustand der Brücke das erste Rampenelement oberhalb des Zwischenelements angeordnet ist und das erste Rampenelement eine kleinere oder größere Länge als das Zwischenelement aufweist.

Es ist bevorzugt, dass das erste und zweite Rampenelement eine vorgegebene Länge aufweisen und die Länge des Zwischenelements veränderbar ist. Hierdurch können standardisierte erste und zweite Rampenelemente für eine Vielzahl von Transportfahrzeugen eingesetzt werden und nur das Zwischenelement muss für ein gegebenes Transportfahrzeug geeignet gewählt werden.

Bei einer bevorzugten Ausführungsform sind das Zwischenelement und das zweite Rampenelement mittels eines verriegelten Gelenks miteinander verbunden. Dies hat den Vorteil, dass jedes Rampenelement als erstes und zweites Rampenelement verwendet werden kann und bei Bedarf das erste und zweite Rampenelement direkt miteinander verbunden werden können.

Weiterhin ist es bevorzugt, dass das freie Ende des zweiten Rampenelements gelenkig mit einem Schwenkarm eines Transportfahrzeugs verbunden ist. Somit ist eine einfache Verlegung der Brücke mittels des Transportfahrzeugs möglich.

Gegenstand der vorliegenden Erfindung ist ein Verlegefahrzeug, das eine erfindungsgemäße Brücke umfasst.

Bei einer bevorzugten Ausführungsform weist das Verlegefahrzeug ein Trägerelement auf, auf dem die Brücke während des Transports gelagert ist.

Vorteilhafterweise ist im vorderen Teil des Fahrzeugs ein Schwenkarm vorgesehen, um die Brücke schwenkbar vom Verlegefahrzeug in die gewünschte Verlegeposition zu überführen.

Bevorzugte Ausführungsformen werden anhand der beigefügten Zeichnungen näher erläutert, in denen zeigen:
- Fig. 1: ein Verlegefahrzeug mit einer transportierbaren faltbaren Brücke im Transportzustand gemäß einer ersten Ausführungsform,
- Fig. 2: ein Verlegefahrzeug mit einer transportierbaren faltbaren Brücke im Transportzustand gemäß einer zweiten Ausführungsform,
- Fig. 3: das in Fig. 2 dargestellte Verlegefahrzeug mit einer transportierbaren faltbaren Brücke während des Übergangs von einem Transportzustand in einen Verlegezustand.

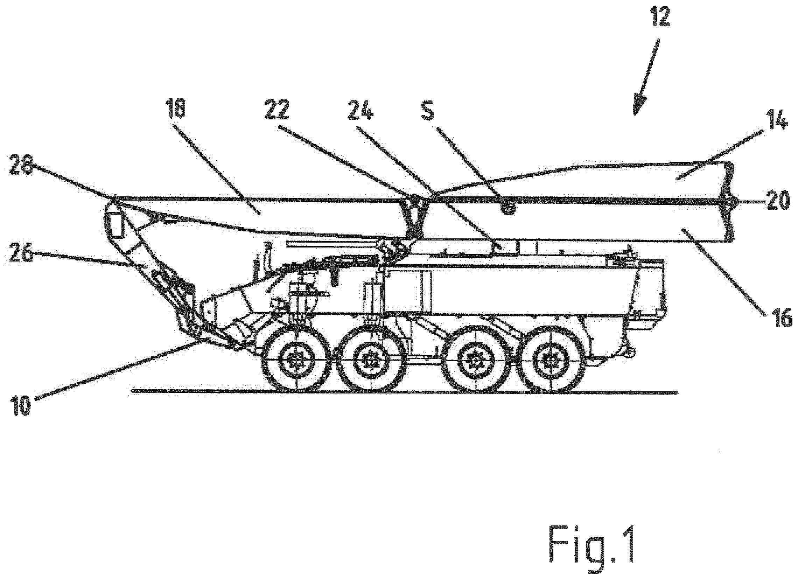

Fig. 1 zeigt ein Verlegefahrzeug 10 mit einer transportierbaren faltbaren Brücke 12 gemäß einer ersten Ausführungsform in einem gefalteten Transportzustand.

Die Brücke 12 umfasst ein erstes Rampenteil 14, ein Zwischenelement 16 und ein zweites Rampenteil 18. Das erste Rampenteil 14, das Zwischenelement 16 und das zweite Rampenteil 18 sind als separate Brückenelemente ausgebildet und weisen jeweils eine Fahrbahnfläche bzw. Fahrspuren auf.

Das Zwischenelement 16 weist zwei entgegengesetzt liegende Seiten auf, wobei eine Seite des Zwischenelements 16 mit dem ersten Rampenelement 14 und die andere Seite des Zwischenelements 16 mit dem zweiten Rampenelement 18 verbunden ist. Zwischen dem ersten Rampenelement 14 und dem Zwischenelement 16 ist eine gelenkige Verbindung 20 vorgesehen, um die das erste Rampenelement 14 schwenkbar ist.

Das erste Rampenelement 14 liegt im Transportzustand auf dem Zwischenelement 16 auf und weist in etwa die gleiche Länge wie das Zwischenelement 16 auf.

Das zweite Rampenelement 18 ist ebenfalls über eine Gelenkverbindung 22 mit dem Zwischenelement 16 verbunden. Die zweite Gelenkverbindung 22 ist verriegelt, so dass die Verbindung zwischen dem zweiten Rampenelement 18 und dem Zwischenelement 16 fest ausgebildet und kein Verschwenken des zweiten Rampenelements 18 um die Gelenkverbindung 22 vorgesehen ist.

Das zweite Rampenelement 18 bildet somit in dem Transportzustand eine Verlängerung des Zwischenelements 16.

Das Vorsehen einer Gelenkverbindung 22 zwischen dem zweiten Rampenelement 18 und dem Zwischenelement 16 bietet den Vorteil, dass die einzelnen Brückenelemente modular einsetzbar sind. So kann beispielsweise das zweite Rampenelement 18 mittels der Gelenkverbindung 22 mit dem ersten Rampenelement 14 gelenkig verbunden werden, um eine bekannte zweiteilige Scherenbrücke auszubilden.

Die Brücke 12 liegt auf einem Trägerelement 24 des Verlegefahrzeugs 10 auf. Insbesondere liegt die Brücke 12 im Wesentlichen im Bereich des Zwischenelements 16 auf dem Trägerelement 24 des Verlegefahrzeugs 10 auf.

Das Trägerelement 24 befindet sich an der Oberseite des Verlegefahrzeugs 10 in etwa in der Mitte des Verlegefahrzeugs 10.

Die Brücke 12 ist mit ihrer Fahrbahn bzw. Fahrspur nach unten auf dem Trägerelement 24 angeordnet.

Das erste Rampenelement 14, das auf das Zwischenelement 16 gefaltet ist, befindet sich im hinteren Bereich des Verlegefahrzeugs 10. Das zweite Rampenelement 18 ist im vorderen Bereich des Verlegefahrzeugs 10 angeordnet.

An der Vorderseite des Verlegefahrzeugs 10 ist ein Schwenkarm 26 vorgesehen. Das vom Verlegefahrzeug 10 wegweisende Ende des Schwenkarms 26 ist mit dem zweiten Rampenelement 18 über eine Gelenkverbindung 28 verbunden. Die Brücke 12 ist über die Gelenkverbindung 28 von dem Verlegefahrzeug 10 in die gewünschte Verlegeposition schwenkbar.

Bei dem dargestellten Verlegefahrzeug handelt es sich um ein Radfahrzeug, alternativ sind jedoch auch Kettenfahrzeuge als Verlegefahrzeuge einsetzbar.

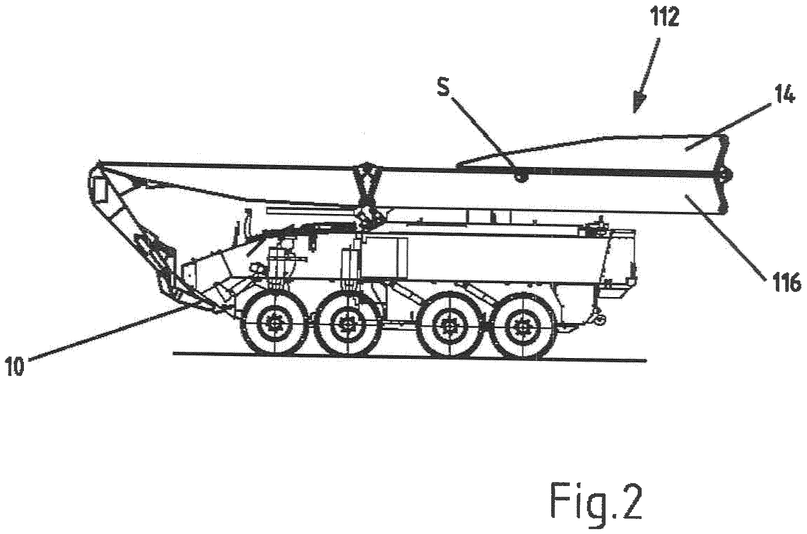

Fig. 2 zeigt das Verlegefahrzeug 10 mit einer weiteren Ausführungsform einer transportierbaren faltbaren Brücke 112.

Die Brücke 112 der in Fig. 2 dargestellten Ausführungsform unterscheidet sich von der in Fig. 1 dargestellten Brücke 12 dadurch, dass das Zwischenelement 116 der in Fig. 2 dargestellten Brücke 112 eine größere Länge aufweist als das Zwischenelement 12 der in Fig. 1 dargestellten Brücke 12. Somit weist das erste Rampenelement 14 bei der in Figur 2 dargestellten Ausführungsform eine geringere Länge als das Zwischenstück 116 auf. Dies führt dazu, dass der Schwerpunkt S bei der in Fig. 2 dargestellten Ausführungsform im Vergleich zu der in Figur 1 dargestellten Ausführungsform in Richtung hinteren Bereich des Fahrzeugs verschoben ist.

Bei einer nicht dargestellten Ausführungsform weist das Zwischenelement eine kleinere Länge als das erste Rampenelement auf, so dass der Schwerpunkt des Fahrzeugs mit Brücke im Vergleich zu der in Figur 1 dargestellten Ausführungsform in Richtung des vorderen Bereichs des Fahrzeugs verschoben ist.

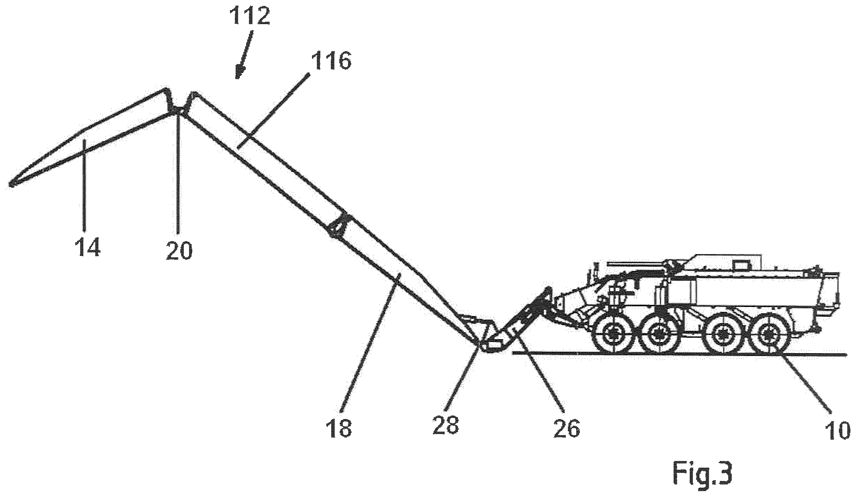

Fig. 3 zeigt die in Fig. 2 dargestellte Ausführungsform eines Verlegefahrzeugs 10 mit einer transportierbaren faltbaren Brücke 112 während des Übergangs von einem Transportzustand zu einem entfalteten Verlegezustand.

Der Schwenkarm 26 am Verlegefahrzeug 10 ist nach unten geschwenkt und das zweite Rampenelement 18 und das starr mit dem zweiten Rampenelement 18 verbundene Zwischenelement 112 sind bereits teilweise um die Gelenkverbindung 28 geschwenkt, so dass die transportierbare faltbare Brücke 112 sich bereits abschnittsweise über dem zu überbrückenden Hindernis befindet.

Das erste Rampenelement 14 und das Zwischenelement 116 sind fast vollständig entfaltet, indem das erste Rampenelement 14 bereits größtenteils um die gelenkige Verbindung 20 geschwenkt ist.

Im nicht dargestellten Verlegezustand, in dem die Brücke über dem zu überbrückenden Hindernis angeordnet ist, sind das zweite Rampenelement 18 und das Zwischenelement 116 vollständig entfaltet und die gelenkige Verbindung 20 verriegelt. Das zweite Rampenelement 18, das Zwischenelement 116 und das erste Rampenelement 14 bilden eine ebene Fläche, auf der Fahrzeuge rollen können.

Bei der in Fig. 3 dargestellte transportierbaren, faltbaren Brücke 112 erfolgen die Entfaltung der Brücke 112 und das Schwenken der Brücke 112 in die Verlegeposition über einem Hindernis im Wesentlichen gleichzeitig.

Vom Verlegezustand kann die transportierbare faltbare Brücke 112 wieder in den gefalteten Transportzustand zurückgeführt werden, um an einen anderen Einsatzort gebracht zu werden. Auch hier kann die Faltung der Brücke 112 und das Verschwenken von der Verlegeposition in den Transportzustand im Wesentlichen gleichzeitig durchgeführt werden.

Das Entriegeln/Verriegeln der Gelenke 20, 28 erfolgt automatisch.

## Patentansprüche

1. Transportierbare faltbare Brücke, die einen gefalteten Transportzustand und einen entfalteten Verlegezustand aufweist, wobei die Brücke (12; 112) umfasst
ein erstes Rampenelement (14),
ein zweites Rampenelement (18) und
ein Zwischenelement (16; 116) mit zwei entgegengesetzt liegenden Seiten, wobei eine Seite des Zwischenelements (16; 116) mit dem ersten Rampenelement (14) und die andere Seite des Zwischenelements (16; 116) mit dem zweiten Rampenelement (18) verbunden sind, wobei das Zwischenelement geeignet ist, die Länge der Brücke zu variieren, und
wobei zwischen dem ersten Rampenelement (14) und dem Zwischenelement (16; 116) eine gelenkige Verbindung (20) vorgesehen ist,
**dadurch gekennzeichnet, dass** im Transportzustand das erste Rampenelement (14) und das Zwischenelement (16; 116) gefaltet sind und das zweite Rampenelement (18) eine Verlängerung des Zwischenelements (16; 116) bildet und das zweite Rampenelement (18) ein freies Ende aufweist, an dem eine Gelenkverbindung (28) vorgesehen ist und das freie Ende des zweiten Rampenelements (18) mittels der Gelenkverbindung (28) gelenkig mit einem Schwenkarm (26) eines Transportfahrzeugs (10) verbindbar ist.

2. Brücke nach Anspruch 1, **dadurch gekennzeichnet, dass** im Transportzustand das erste Rampenelement (14) oberhalb des Zwischenelements (16) angeordnet ist und das erste Rampenelement (14) in etwa die gleiche Länge aufweist wie das Zwischenelement (16; 116).

3. Brücke nach Anspruch 1, **dadurch gekennzeichnet, dass** im Transportzustand das erste Rampenelement (14) oberhalb des Zwischenelements (116) angeordnet ist und das erste Rampenelement (14) eine kleinere oder größere Länge als das Zwischenelement (116) aufweist.

4. Brücke nach einem der vorhergehenden Ansprüche, **dadurch gekennzeichnet, dass** das erste und zweite Rampenelement (14, 18) eine vorgegebene Länge aufweisen und die Länge des Zwischenelements (16; 116) veränderbar ist.

5. Brücke nach einem der vorhergehenden Ansprüche, **dadurch gekennzeichnet, dass** im Verlegezustand das erste Rampenelement (14) und das Zwischenelement (16; 116) entfaltet sind.

6. Brücke nach einem der vorhergehenden Ansprüche, **dadurch gekennzeichnet, dass** das Zwischenelement (16; 116) und das zweite Rampenelement (18) mittels eines verriegelten Gelenks (22) miteinander verbunden sind.

7. Verlegefahrzeug, umfassend eine Brücke (12; 112) nach einem der vorhergehenden Ansprüche.

8. Verlegefahrzeug nach Anspruch 7, **dadurch gekennzeichnet, dass** das Verlegefahrzeug (10) ein Trägerelement (24) aufweist, auf dem die Brücke (12; 112) während des Transports gelagert ist.

9. Verlegefahrzeug nach einem der Ansprüche 7 oder 8, **dadurch gekennzeichnet, dass** im vorderen Bereich des Fahrzeugs (10) ein Schwenkarm (26) vorgesehen ist.

## Claims

1. Transportable foldable bridge which has a folded transport state and an unfolded deployed state, the bridge (12; 112) comprising a first ramp element (14), a second ramp element (18) and an intermediate element (16; 116) which has two opposing ends, one end of the intermediate element (16; 116) being connected to the first ramp element (14) and the other end of the intermediate element (16; 116) being connected to the second ramp element (18), the intermediate element being suitable for varying the length of bridge, and a hinged connection (20) being provided between the first ramp element (14) and the intermediate element (16; 116), **characterised in that**, in the transport state, the first ramp element (14) and the intermediate element (16; 116) are folded, the second ramp element (18) forms an extension of the intermediate element (16; 116), the second ramp element (18) has a free end on which a hinge connection (28) is provided, and the free end of the second ramp element (18) can be hingedly connected to a pivot arm (26) of a transport vehicle (10) by means of the hinge connection (28).

2. Bridge according to claim 1, **characterised in that**, in the transport state, the first ramp element (14) is arranged above the intermediate element (16) and the first ramp element (14) is approximately the same length as the intermediate element (16; 116).

3. Bridge according to claim 1, **characterised in that**, in the transport state, the first ramp element (14) is arranged above the intermediate element (116) and the first ramp element (14) is smaller or larger in length than the intermediate element (116).

4. Bridge according to any of the preceding claims, **characterised in that** the first and second ramp elements (14, 18) have a predetermined length and the length of the intermediate element (16; 116) is variable.

5. Bridge according to any of the preceding claims, **characterised in that**, in the deployed state, the first ramp element (14) and the intermediate element (16; 116) are unfolded.

6. Bridge according to any of the preceding claims, **characterised in that** the intermediate element (16; 116) and the second ramp element (18) are interconnected by means of a locked joint (22).

7. Laying vehicle comprising a bridge (12; 112) according to any of the preceding claims.

8. Laying vehicle according to claim 7, **characterised in that** the laying vehicle (10) has a carrier element (24) on which the bridge (12; 112) is mounted during transport.

9. Laying vehicle according to either claim 7 or claim 8, **characterised in that** a pivot arm (26) is provided in the front region of the vehicle (10).

## Revendications

1. Pont pliable transportable présentant un état replié de transport et un état déployé de pose, ledit pont (12 ; 112) comprenant
un premier élément (14) formant rampe,
un second élément (18) formant rampe et
un élément intermédiaire (16 ; 116) muni de deux côtés pointant à l'opposé, un côté de l'élément intermédiaire (16 ; 116) étant relié au premier élément (14) formant rampe, et l'autre côté dudit élément intermédiaire (16 ; 116) étant relié au second élément (18) formant rampe, ledit élément intermédiaire étant approprié pour faire varier la longueur du pont, et
une liaison articulée (20) étant prévue entre ledit premier élément (14) formant rampe et ledit élément intermédiaire (16 ; 116),
**caractérisé par le fait qu'**à l'état de transport, le premier élément (14) formant rampe et l'élément intermédiaire (16; 116) sont repliés, le second élément (18) formant rampe constitue un prolongement dudit élément intermédiaire (16 ; 116), ledit second élément (18) formant rampe présente une extrémité libre au niveau de laquelle un rattachement articulé (28) est prévu, et ladite extrémité libre dudit second élément (18) formant rampe peut être reliée de manière articulée, au moyen dudit rattachement articulé (28), à un bras pivotant (26) d'un véhicule de transport (10).

2. Pont selon la revendication 1, **caractérisé par le fait qu'**à l'état de transport, le premier élément (14) formant rampe est disposé au-dessus de l'élément intermédiaire (16), et ledit premier élément (14) formant rampe présente approximativement la même longueur que ledit élément intermédiaire (16 ; 116).

3. Pont selon la revendication 1, **caractérisé par le fait qu'**à l'état de transport, le premier élément (14) formant rampe est disposé au-dessus de l'élément intermédiaire (116), et ledit premier élément (14) formant rampe présente une longueur inférieure ou supérieure à celle dudit élément intermédiaire (116).

4. Pont selon l'une des revendications précédentes, **caractérisé par le fait que** les premier et second éléments (14, 18) formant rampes présentent une longueur préétablie, et la longueur de l'élément intermédiaire (16 ; 116) peut être modifiée.

5. Pont selon l'une des revendications précédentes, **caractérisé par le fait que** le premier élément (14) formant rampe et l'élément intermédiaire (16 ; 116) sont déployés à l'état de pose.

6. Pont selon l'une des revendications précédentes, **caractérisé par le fait que** l'élément intermédiaire (16 ; 116) et le second élément (18) formant rampe sont reliés l'un à l'autre au moyen d'une articulation verrouillée (22).

7. Véhicule poseur, incluant un pont (12 ; 112) conforme à l'une des revendications précédentes.

8. Véhicule poseur selon la revendication 7, **caractérisé par le fait que** ledit véhicule poseur (10) est doté d'un élément de support (24), sur lequel le pont (12 ; 112) est déposé au cours du transport.

9. Véhicule poseur selon l'une des revendications 7 ou 8, **caractérisé par le fait qu'**un bras pivotant (26) est prévu dans la région antérieure dudit véhicule (10).
